# DEMANDE DE BREVET EUROPEEN

(11) **EP 2 088 753 A1**
(43) Date de publication de la demande: **12.08.2009**
(21) Numéro de dépôt: 09151969.4
(22) Date de dépôt: 03.02.2009
(51) Int. Cl.: H04L 29/12

(54) **Procédé de télécommunication facilitant le changement de réseau**

(30) Priorité: 07.02.2008 FR 0850773
(71) Demandeur: Alcatel Lucent, 75008 Paris (FR)
(72) Inventeur: Gras, Laurence, 91620 Nozay (FR); Mongazon-Cazavet, Bruno, Alcatel-Lucent Bell Labs France, 91620 Nozay (FR)
(74) Mandataire: El Manouni, Josiane

(57) **Abrégé**

Dans le procédé de télécommunication, un terminal (2) accède à un réseau de téléphonie mobile (4, 18). On insère une valeur dépendant du terminal dans un champ d'identifiant-client d'une requête DHCP.

On prévoit aussi un terminal (2) apte à accéder à un réseau de téléphonie mobile (4, 18) et à insérer une valeur dépendant du terminal dans un champ d'identifiant-client d'une requête DHCP.

## Description

L'invention concerne les réseaux de télécommunication, en particulier les réseaux de téléphonie mobile.

On connaît des terminaux mobiles tels que des téléphones aptes à faire transiter des communications au choix sur un réseau de téléphonie mobile de type 3G ou 4G. Toutefois, ces réseaux présentent des architectures différentes. De plus, ils mettent chacun en oeuvre des protocoles différents. C'est ainsi que le terminal se voit attribuer une certaine adresse IP en vue de ses communications sur un réseau de type 3G. Cette adresse est choisie, par un élément du réseau, parmi les adresses disponibles d'un groupe d'adresses. Si le terminal accède à un réseau 4G, il se voit attribuer une adresse IP qui en général différente de la précédente. Il s'ensuit que, lors d'un déplacement de l'utilisateur, si le terminal quitte un réseau 3G et accède à un réseau 4G ou inversement, il change d'adresse IP, ce qui risque d'interrompre la communication en cours.

Un but de l'invention est d'assurer une continuité de service afin que les communications ne soient pas interrompues lorsque le terminal passe d'un type de réseau à un autre, et que ce changement soit donc transparent pour l'utilisateur

A cet effet, on prévoit selon l'invention un procédé télécommunication au moyen d'un terminal accédant à un réseau de téléphonie mobile, dans lequel on insère une valeur dépendant du terminal dans un champ d'identifiant-client d'une requête DHCP.

Ainsi, on utilise le même identifiant pour le terminal dans la requête DHCP en vue de l'attribution de l'adresse IP, quel que soit le type de réseau auquel il accède. Il s'ensuit que le serveur DHCP donnera au terminal la même adresse IP quel que soit le réseau d'accès employé pour l'attribution de cette adresse, et en particulier quels que soient l'architecture du réseau et les protocoles mis en oeuvre. Le terminal peut ainsi bénéficier d'une adresse IP unique, ce qui permet d'assurer la continuité de la communication lorsqu'il passe d'un type de réseau à un autre.

Le procédé selon l'invention pourra présenter en outre au moins l'une quelconque des caractéristiques suivantes :
- l'étape d'insertion est exécutée par un élément autre que le terminal ;
- un élément, tel que le terminal ou une passerelle, envoie un message contenant la valeur, en vue de l'insertion;
- un élément autre que le terminal extrait la valeur d'un message reçu, en vue de l'insertion;
- l'étape d'insertion est exécutée par le terminal;
- on attribue une adresse IP au terminal et le terminal reçoit et/ou envoie des données au moyen de l'adresse IP; et
- le réseau est de type xG avec x supérieur ou égal à 2,5, et par exemple égal à 3 ou à 4.

De préférence, la valeur comprend l'un des éléments suivants :
- un numéro IMSI;
- un numéro MSISDN : et
- une adresse de type @MAC.

En particulier, l'IMSI est, comme on le sait, un numéro unique généralement stocké dans la carte SIM ou USIM du terminal et qui permet d'identifier ce dernier. On peut donc commodément le choisir pour la valeur dans le cadre du procédé de l'invention.

On prévoit également selon l'invention un procédé de télécommunication au moyen d'un terminal accédant à un réseau de téléphonie mobile, dans lequel on reçoit une requête DHCP contenant, dans un champ d'identifiant-client, une valeur dépendant du terminal.

On prévoit également selon l'invention un terminal apte à accéder à un réseau de téléphonie mobile et à insérer une valeur dépendant du terminal dans un champ d'identifiant-client d'une requête DHCP.

De préférence le terminal est apte à accéder à un réseau de téléphonie mobile de type xG avec x strictement inférieur à 4 et à un réseau de téléphonie mobile de type yG avec y supérieur ou égal à 4.

On prévoit également selon l'invention un élément d'un réseau de télécommunication, apte à insérer dans un champ d'identifiant-client d'une requête DHCP une valeur dépendant d'un terminal prédéterminé accédant à un réseau de téléphonie mobile.

On prévoit également selon l'invention un ensemble de télécommunication comprenant un terminal selon l'invention et/ou un élément selon l'invention.

Enfin, on prévoit selon l'invention un programme comprenant des instructions aptes à commander la mise en oeuvre d'un procédé selon l'invention, un support d'enregistrement comprenant un tel programme ainsi que la mise à disposition d'un tel programme en vue de son téléchargement.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est un schéma illustrant de façon simplifiée les réseaux utilisés dans le présent exemple de mise en oeuvre de l'invention : et

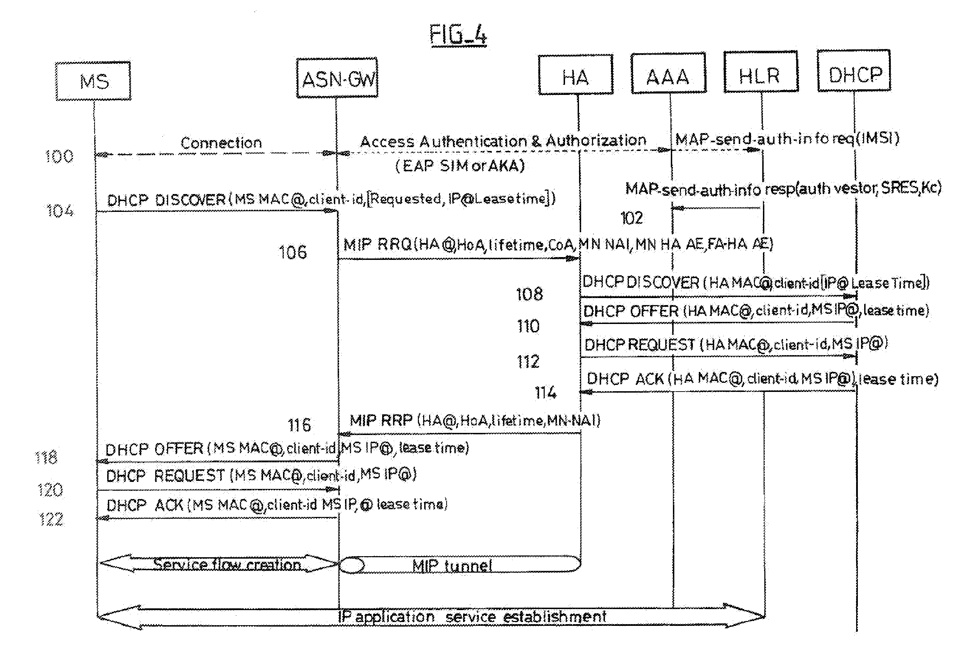

- les figures 2 à 4 sont des organigrammes illustrant respectivement les étapes de mise en oeuvre du procédé de l'invention dans le présent exemple,

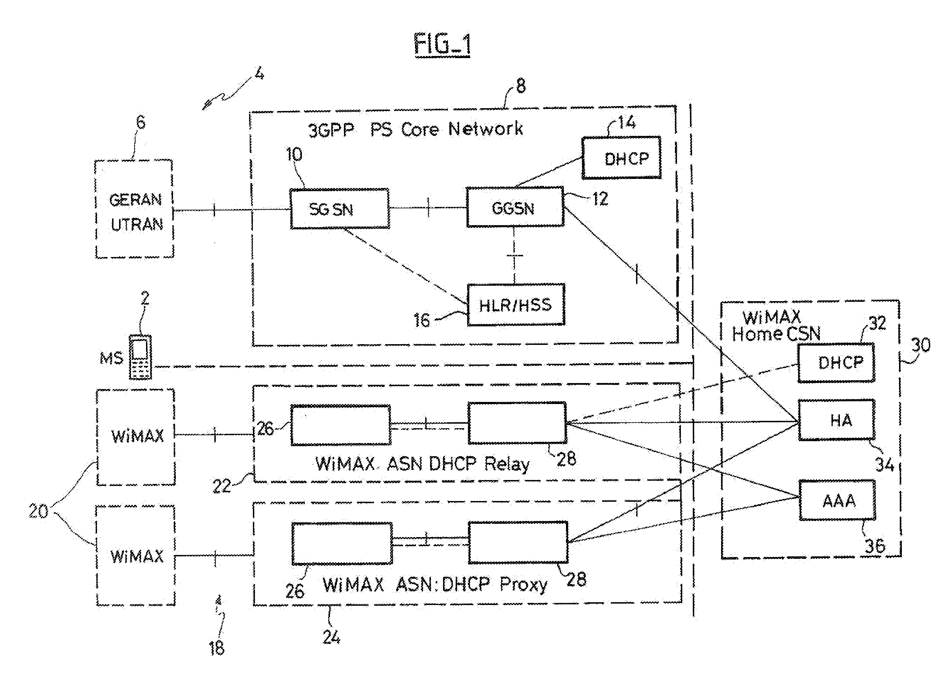

On va tout d'abord décrire en référence à la figure 1 les principaux composants des réseaux intervenant dans le présent exemple de mise en oeuvre du procédé de l'invention. On a lustré un terminal mobile d'utilisateur 2 désigné par MS. Il s'agit par exemple ici d'un téléphone mobile. Mais il pourrait s'agir en variante d'un terminal mobile d'un autre type, tel qu'un assistant personnel numérique ou un ordinateur portable. Ce téléphone est apte à assurer des communications sur les réseaux de types 3G et 4G qui vont être décrits.

Un réseau 4 a été illustré sur la figure 1. Il s'agit d'un réseau de téléphonie mobile de type 3G entrant dans le cadre du projet dit 3GPP (3rd Generation Partnership Project). Il s'agit d'une coopération entre des organismes de standardisation connus en eux-mêmes visant à produire des spécifications techniques pour les réseaux mobiles de troisième génération. Par réseaux de type 3G, on désigne ici des réseaux tels que le réseau UMTS (Universal Mobile Telecommunication System). En variante, il peut s'agir d'un réseau de type 3,5G comme le réseau HSDPA ou 3,75G comme le réseau HSUPA. Il peut aussi s'agir d'un réseau de type 2,5G tel que le GPRS (qui entre aussi dans le projet 3GPP)

Le réseau 4 comprend des point d'entrée tels que le point 6 par lesquels le terminal 2 peut accéder à ce réseau. Ce point d'entrée sera ou bien de type GERAN (c'est-à-dire GSM Edge Radio Access Network) ou bien de type UTRAN (c'est-à-dire UMTS Terrestrial Radio Access Network). Le réseau 4 comprend également un ensemble 8 formant un réseau de coeur assurant l'échange de paquets (ou 3GPP PS Core Network). Cet ensemble 8 comprend des noeuds de support de type SGSN (pour Serving GPRS Support Node) tels que le noeud 10. Il comprend également des noeuds 12 de type GGSN (pour Gateway GPRS Support Node). L'ensemble 8 comprend des serveurs DHCP 14 (pour Dynamic Host Configuration Protocol). Il comprend également des registres 16 de type HLR/HSS (pour Home Location Register/Home Subscriber Server). Les noeuds 10, les registres 16 et les serveurs 14 sont aptes à communiquer avec les noeuds 12. Les noeuds 10 sont également aptes à communiquer avec les points d'entrée 6. Une liaison est également Possible entre les noeuds 10 et les registres 16.

Le réseau 18 est de type 4G et en l'espèce de type WiMAX (pour Worldwide Interoperability for Microwave Access). Il comprend des points d'entrée 20 au moyen desquels le terminal 2 peut accéder à ce réseau. Il comprend deux ensembles 22 et 24 assurant l'interface entre des points d'accès respectifs 20 et un ensemble 26 dont il sera question plus loin. Les ensembles 22 et 24 sont des sous-réseaux d'accès au service WiMAX désignés ici par WiMAX ASN (pour Access Service Network). L'ensemble 22 supporte le mode DHCP Relay tandis que l'ensemble 24 supporte le mode DHCP Proxy. Ils comprennent chacun des stations de base 26 ou BS ainsi que des passerelles 28 désignées ici par le terme ASN GW.

Enfin, l'ensemble 30 désigne un réseau de services de connectivité du réseau 18. Il est indiqué ici par WiMAX HOME CSN (CSN pour Connectivity Services Network). Il comprend des serveurs DHCP 32, des dispositifs 34 de type HA (pour Home Agent) également appelés "mobile IP Home Agent" et désignés par le terme de "agent mère" ou "agent natif', Enfin, il comprend des serveurs 36 de type AAA (pour Authentication, Authorization, Accounting soit Authentification, Autorisation, Comptabilité).

Le terminal 2 est apte à accéder au réseau 4 via les points d'entrée 6 GERAN/UTRAN ainsi qu'au réseau 18 via les points d'entrée 20 de type WiMAX. Le terminal s'est vu attribuer de façon connue en soi un numéro connu sous le terme IMSI (pour International Mobile Subscriber Identity). On sait que ce numéro permet à un réseau de téléphonie mobile d'identifier un terminal sur le réseau. Ce numéro est stocké dans la carte SIM ou USIM du terminal et n'est généralement pas connu de l'utilisateur. Il comprend 15 ou 16 chiffres.

On va maintenant décrire de quelle façon le terminal 2 peut se voir attribuer une adresse IP suivant qu'il accède au réseau 4 ou au réseau 18.

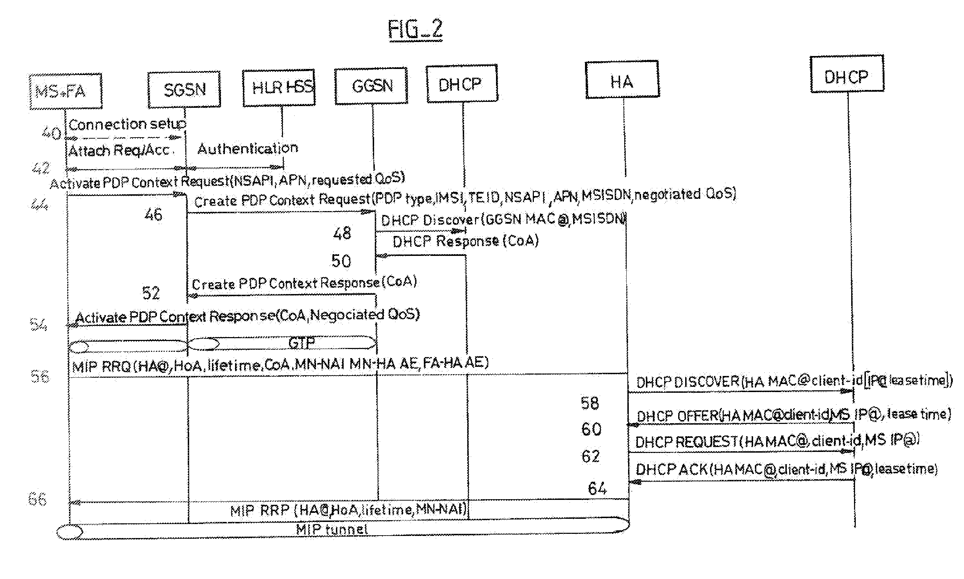

En référence à la figure 2, on suppose que le terminal 2 accède au réseau 4 de type 3G . Dans le présent exempte, l'entrée sur le réseau 3G se fait en mode CMIP. On se trouve ici dans le cas du mode CMIP Co-located CoA. Le terme "CoA" signifie Care of Address ou adresse temporaire ou encore complémentaire.

Tout d'abord, lors d'une étape 40, le terminal 2 coopérant avec un dispositif de type Mobile IP Foreign Agent, ou FA, établit une connexion avec un noeud 10. C'est t'étape intitulée "Connection setup".

Ensuite, à l'étape 42, une sous-étape d'attachement est effectuée entre le terminal MS et l'agent FA d'une part et le noeud 10 d'autre part. Ce dernier met également en oeuvre une étape d'authentification, désignée par le terme "Authentication", avec l'un des registres 16.

A l'étape suivante 44, le terminal MS avec l'agent étranger FA envoie au noeud 10 une instruction d'activation de type "Activate PDP Context Request" comprenant les champs NSAPI, APN et requested QoS.

A l'étape suivante 46, le noeud 10 envoie à l'un des noeuds 12 une instruction de crèation de type "Create PDP Context Request" comprenant les champs PDP type, IMSI, TEID, NSAPI, APN, MSISDN et Negotiated QoS. Le terme APN signifie Access Point Name.

A l'étape suivante 48, le noeud 12 adresse au serveur DHCP 14 du réseau 3G un message de type "DHCP Discover" avec les champs GGSN MAC @ et MSISDN.

Puis à l'étape 50, le serveur DHCP 14 adresse au noeud 12 une réponse de type "DHCP Response" avec le champ CoA.

A cette étape 50 fait suite une étape 52 au cours de laquelle le noeud 12 adresse au noeud 10 une réponse du type "Create PDP Context Response" avec le champ CoA.

Il s'ensuit une étape 54 au cours de laquelle le noeud 10 adresse lui-même au terminal et à l'agent étranger une réponse de type "Activate PDP Context Response" avec les champs CoA et Negociated QoS.

A l'étape suivante 56, le couple terminal et agent étranger adresse à l'agent mère 34 du réseau 4G un message de requête d'enregistrement MIP (pour Mobile IP) du type MIP RRQ. Il s'agit donc d'obtenir une adresse IP. Ce message comprend les champs HA@, HoA, lifetime, CoA, MN-NAI, MN-HA AE et FA-HA AE. Le champ HoA est pris égal à 0. Le champ CoA est pris égal à FA-CoA. Enfin, le champ MN-NAI est pris égal à IMSI@realm. II comprend donc le numéro IMSI.

Lors de l'étape ultérieure 58, l'agent 34 s'apprête à adresser au serveur DHCP 32 un message de type "DHCP Discover" avec les champs HA MAC@, client-id et [IP@ lease time]. Pour cela, l'agent mère 34 extrait du champ MN-NAI du message reçu la valeur IMSI@realm et l'insère dans le message à envoyer comme valeur de l'identifiant client "client-id" de ce message. A ce stade, dans la procédure avec le serveur DHCP, l'agent mère utilise donc comme valeur de l'identifiant client "client-id" la valeur du MN-NAI du message MIP RRQ.

Lors de l'étape suivante 60, le serveur 32 réplique à l'agent mère 34 par un message d'offre DHCP de type "DHGP Offer" avec les champs HA MAC@, client-id, MS IP @ et lease time. Le champ client-id y a la même valeur que dans le message de l'étape précédente.

Lors de l'étape suivante 62, l'agent mère 34 adresse au serveur DHCP 32 une requête DHCP comprenant les champs HA MAC@, client-id et MS IP@. Ici encore, l'agent mère utilise comme valeur de l'identifiant client "client-id" la valeur du MN-NAI du message MIP RRQ, à savoir IMSI@realm.

Lors de l'étape suivante 64, le serveur 32 répond à l'agent mère 34 par un message d'accusé réception de type "DHCP ACK" comprenant les champs HA MAC@, client-id, MS IP @ et lease time. Le champ client-id y a la même valeur que dans le message de l'étape précédente.

Enfin, au cours d'une dernière étape 66, l'agent mère 34 adresse au terminal un message de type "MIP RRP" comprenant les champs HA@, HoA. lifetime et MN-NAI. La valeur de ce champ MN-NAI est donc toujours à ce stade égale à IMSI@realm.

Un tunnel de type MIP s'établit alors entre le terminal et l'agent mère 34. Le terminal peut alors assurer des communications sur le réseau. Il peut au moyen de l'adresse IP envoyer et recevoir des données, y compris de la voix.

On voit donc que l'agent mère 34, le HA, utilise la valeur du champ MN-NAI du message MIP RRQ en tant que identifiant client (client-id) dans la procédure avec le serveur DHCP. De même, le serveur DHCP retourne un message dans lequel le champ HoA a la valeur du champ client-id, à savoir celle du champ MN-NAI.

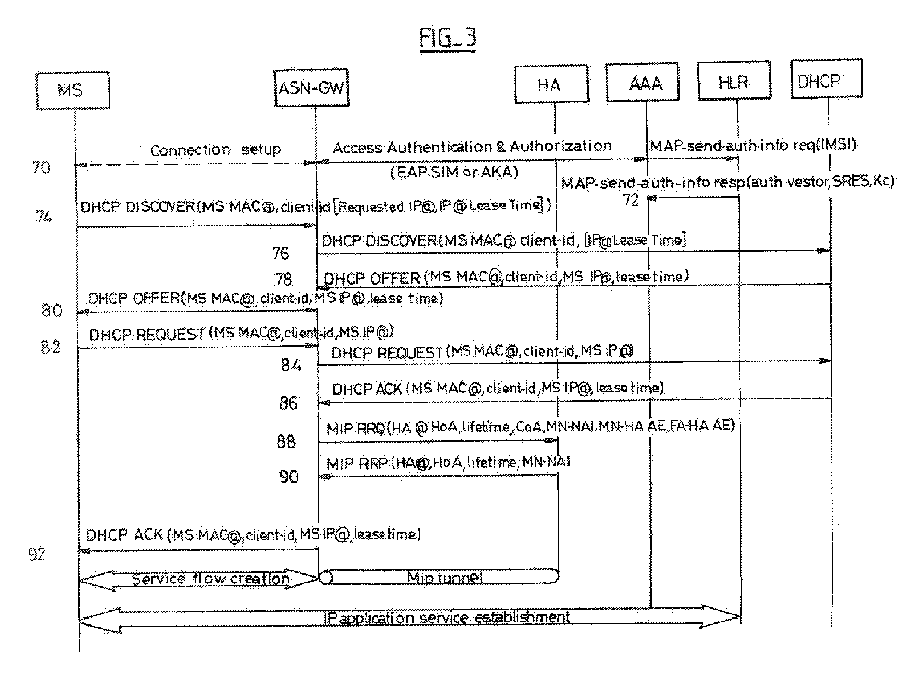

On a illustré à la figure 3 les étapes suivies par le procédé pour l'attribution d'une adresse IP au terminal lorsque ce dernier se connecte au réseau 18 via la passerelle 28 qui supporte le mode DHCP Relay.

Au cours d'une première étape 70, une connexion s'établit entre le terminal 12 et la passerelle 28. Une phase d'accès d'authentification et d'autorisation, intitulée "Access Authentication Authorization", est également effectuée en coopération avec la passerelle 28 et le dispositif AAA 36. Enfin, ce dernier adresse au registre 16 un message de type NAP-send-auth-info req(IMSI).

Il s'ensuit une étape 72 au cours de laquelle le registre 16 réplique au dispositif AAA par un message de type MAP-send-auth-info resp (auth vestor, SRES, Kc).

Au cours d'une étape suivante 74, le terminal adresse à la passerelle 28 un message en vue de l'attribution d'une adresse IP. Ce message est du type "DHCP Discover" et comporte les champs MS MAC@, client-id et [Requested IP@, IP@ lease time]. Dans ce message, le champ client-id, qui est le champ d'identifiant client, est pris à la valeur MN-NAI, à savoir en l'espèce la valeur IMSI@realm. Il comprend donc le numéro IMSI.

Au cours d'une étape suivante 76, la passerelle 28 transmet au serveur DHCP 32 un message de type "DHCP Discover" qui comprend les champs MS MAC@, client-id et [IP@ lease time].

Lors de l'étape suivante 78, le serveur 32 adresse à la passerelle 28 un message d'offre DHCP de type "DHCP Offer" comprenant les champs MS MAC@, client-id, MS IP@ et lease time.

Ce dernier message est transcrit par la passerelle et renvoyé au terminal 12 lors d'une étape ultérieure 80 sous la forme "DHCP Offer" avec les champs MS MAC@, client-id, MS IP@ et lease time.

Il s'ensuit, à l'étape 82, que le terminal adresse à la passerelle 28 une requête OHCP avec les champs MS MAC@, client-id et MS IP@.

Cette dernière, à l'étape suivante 84, est transmise par la passerelle au serveur 32 sous la même forme.

A l'étape suivante 86, le serveur répond à la passerelle avec un message d'accusé de réception de type "DHCP ACK" ayant les mêmes champs avec en plus le champ lease time. Ainsi, le serveur DHCP retourne une HoA qui donne l'identifiant client client-id.

Dans les étapes 76 à 86, le champ client-id a la même valeur que dans le message de l'étape 74.

Au cours de l'étape suivante 88, la passerelle adresse à l'agent mère 34 une requête d'adresse MIP sous la forme d'un message de type "MIP RRQ" avec les champs HA@. HoA. lifetime, CoA, MN-NAI, MN-HA AE et FA-HA AE. La valeur HoA est prise comme MS IP@ et la valeur CoA est prise comme FA-GoA.

Lors de l'étape suivante 90, l'agent mère 34 réplique à la passerelle 28 avec un message du type "MIP RRP" comprenant les champs HA@, HoA, lifetime et MN-NAI.

La passerelle 28, au cours de l'étape suivante 92, adresse au terminal 12 un message d'accusé de réception de type "DHCP ACK" avec les champs MS MAC@, client-id, MS IP@ et lease time. Le champ client-id a la même valeur que dans le message de l'étape 74.

Un flux de services peut alors s'établir entre le terminal et la passerelle 28 et un tunnel de type MIP s'établit entre cette dernière et l'agent mère 34. Une liaison de type IP est alors établie entre le terminal et le réseau 4G. Le terminal peut au moyen de l'adresse IP envoyer et recevoir des données, y compris de la voix.

On voit donc que, ici encore, l'identifiant client désigné par "client-id" est pris avec la valeur IMSI@)realm. En retour, l'adresse IP que reçoit le terminal à l'étape 92 comprend cette même valeur dans le champ client-id. Dans tout le procédé qui vient d'être décrit en référence à la figure 3, la valeur client-id a ainsi été prise à la valeur IMSI@realm,

Nous allons enfin décrire les étapes suivies dans le procédé pour l'attribution d'une adresse IP au terminal 2 via le réseau 18 et via la passerelle 28 qui supporte le mode DHCP Proxy.

Les étapes 100, 102 et 104 sont identiques respectivement aux étapes 70, 72 et 74 présentées en référence à la figure 3 et ne seront pas décries à nouveau

A l'étape 106, la passerelle 28 adresse à l'agent mère 34 un message de type "MIP RRQ" avec les champs HA@, HoA, lifetime, CoA, MN-NAI, MN-HA AE et FA-HA AE. A ce stade, le champs HoA est pris égal à 0 et le champs CoA est pris égal à FA-CoA. La valeur MN-NAI est prise égale à IMSI@realm.

Lors de l'étape ultérieure 108, l'agent mère 34 adresse au serveur DHCP 32 un message de type "DHCP Discover" avec les champs HA MAC@, client-id et [IP@ lease time]. A ce stade, dans la procédure avec le serveur DHCP, l'agent mère utilise comme valeur de l'identifiant client "client-id" la valeur du MN-NAI du message MIP RRQ, à savoir en l'espèce la valeur IMSI@realm.

Lors de l'étape suivante 110, le serveur 32 réplique à l'agent mère 34 par un message d'offre DHCP de type "DHCP Offer" avec les champs HA MAC@, client-id, MS IP @ et lease time.

A l'étape suivante 112, l'agent mère adresse au serveur 32 une requête DHCP avec les champs HA MAC@, client-id et MS IP @.

Le serveur 32 réplique à l'étape 114 à l'agent mère 34 avec un message d'accusé de réception de type "DHCP ACK" avec les champs HA MAC@, client-id, MS IP @ et lease time.

Il s'ensuit qu'à l'étape 116, l'agent mère transmet à la passerelle 28 un message de type "MIP RRP" avec les champs HA@, HoA, lifetime et MN-NAI.

A l'étape suivante 118, la passerelle 28 adresse au terminal 2 un message d'offre DHCP de type "DHCP Offer" avec les champs MS MAC@, client-id, MS IP@ et lease time.

Le terminal adresse à la passerelle 28 à l'étape 120 une requête DHCP avec les champs MS MAC@, client-id et MS IP@.

A l'étape 122, la passerelle 28 répond au terminal avec un message d'accusé de réception de type "DHGP ACK" avec les champs MS MAC@, client-id, MS IP @ et lease time.

II s'ensuit qu'un flux de service est crée entre le terminal et la passerelle 28 et qu'un tunnel de type MIP est en place entre cette dernière et l'agent mère 34. Un service d'application IP peut alors se mettre en place entre tous les éléments du système, y compris le terminal. Ce derniet peut au moyen de l'adresse IP envoyer et recevoir des données, y compris de la voix.
Ainsi, dans les étapes où ce champ apparaît, le champ "client-id" a la valeur IMSI@realm. On voit donc que, après l'étape d'authentification, le terminal envoie à la passerelle son numéro IMSI dans l'identifiant client en vue de la requête DHCP. La passerelle envoie un message de requéte d'enregistrement MIP à l'agent mère avec un numéro NAI contenant le numéro IMSI. L'agent mère utilise la valeur IMSI@realm en tant qu'identifiant client dans le champ "client-id" de la requête DHCP qu'il envoie au serveur DHCP pour requérir une adresse IP. L'adresse IP ainsi obtenue comprend un champ d'identifiant client à la valeur IMSI@realm. La passerelle 28 obtient la valeur du champ HA@ du serveur AAA durant la procédure d'authentification.

Le terminal comprend des moyens classiques tels que unité centrale, mémoire, moyens d'émission et de réception, le rendant apte à mettre en oeuvre les étapes du procédé le concernant.

Le procédé pourra être exécuté au moyen d'un ou plusieurs programmes d'ordinateur comprenant des instructions aptes à commander la mise en oeuvre de tout ou partie des étapes du procédé. Ce programme pourra être inscrit sur un support d'enregistrement tel qu'un disque CD ou DVD. On peut prévoir une mise à disposition d'un tel programme, par exemple sur internet en vue de son téléchargement.

Dans ce mode de réalisation, le numéro NAI utilisé pour l'enregistrement MIP ou l'identifiant client utilisé pour la procédure DHCP est base sur le numéro IMSI. Quels que soient le réseau et le point d'entrée utilisés pour y accéder, le terminal se voit donc attribuer une adresse IP qui est la même. Le terminal garde donc la même adresse IP, y compris lorsqu'il change de réseau. Lorsque le terminal quitte l'accès à un réseau pour accéder à un autre réseau, on assure ainsi une continuité de service et les communications effectuées par le terminal ne sont pas interrompues. L'adresse IP peut-être fournie par un serveur DHCP commun. Grâce à la carte SIM, le terminal peut utiliser le numéro IMSI pour l'identifiant dans toutes les procédures et tous les acteurs des différentes procédures vont connaître cet identifiant commun.

On voit donc qu'on utilise le même identifiant pour le terminal quelles que soient la technologie et les procédures employées. L'identifiant unique peut être basé sur un numéro de type IMSI, MSISON (pour Mobile Station ISDN Number) ou encore sur une donnée de type adresse MAC ou @MAC.

L'allocation d'adresse IP peut donc se faire par un serveur DHCP commun utilisant un identifiant client uniforme. Quel que soit donc le mécanisme de mobilité employé, à savoir qu'il s'agisse d'un mécanisme de type PMIP DHCP RELAY ou PMIP DHCP PROXY ou MIP ou encore CMIP, le serveur DHCP attribue la même adresse IP au terminal. L'invention permet donc d'attribuer une adresse IP unique à un terminal d'utilisateur utilisant différents types de couvertures successifs, qu'il s'agisse de couvertures du type GSM, WiMAX ou WiFi. Cet identifiant commun est utilisé dans toutes les procédures et à toutes les étapes, notamment celles d'authentification et d'allocation d'adresse IP et durant les procédures de mobilité. L'invention n'implique pas de modification de protocole. Elle fournit un mécanisme simple et efficace de cartographie (ou maping) des identités.

Bien entendu, on pourra apporter à l'invention de nombreuses modifications sans sortir du cadre de celle-ci.

## Revendications

1. Procédé de télécommunication au moyen d'un terminal (2) accédant à un réseau de téléphonie mobile (4, 18), **caractérisé en ce qu'**on insère une valeur dépendant du terminal dans un champ d'identifiant-client d'une requête DHCP.

2. Procédé selon la revendication précédente dans lequel l'étape d'insertion est exécutée par un élément (28, 34) autre que le terminal (2).

3. Procédé l'une quelconque des revendications précédentes dans lequel un élément, tel que le terminal (2) ou une passerelle (28), envoie un message contenant la valeur, en vue de l'insertion.

4. Procédé selon l'une quelconque des revendications précédentes dans lequel un élément (34) autre que le terminal (2) extrait la valeur d'un message reçu, en vue de l'insertion.

5. Procédé selon la revendication 1 dans lequel l'étape d'insertion est exécutée par le terminal (2).

6. Procédé selon l'une quelconque des revendications précédentes dans lequel on attribue une adresse IP au terminal (2) et le terminal reçoit et/ou envoie des données au moyen de l'adresse IP.

7. Procédé selon l'une quelconque des revendications précédentes dans lequel le réseau (4, 18) est de type xG avec x supérieur ou égal à 2,5, et par exemple égal à 3 ou à 4.

8. Procédé selon l'une quelconque des revendications précédentes dans lequel la valeur comprend l'un des éléments suivants :
- un numéro IMSI;
- un numéro MSISDN ; et
- une adresse de type @MAC.

9. Procédé de télécommunication au moyen d'un terminal (2) accédant à un réseau de téléphonie mobile (4, 18), **caractérisé en ce qu'**on reçoit une requête DHCP contenant, dans un champ d'identifiant-client, une valeur dépendant du terminal.

10. Terminal (2) **caractérisé en ce qu'**il est apte à accéder à un réseau de téléphonie mobile (4, 18) et à insérer une valeur dépendant du terminal dans un champ d'identifiant-client d'une requête DHCP.

11. Terminal selon la revendication précédente, apte à accéder à un réseau de téléphonie mobile (4) de type xG avec x strictement inférieur à 4 et a un réseau de téléphonie mobile (18) de type yG avec y supérieur ou égal à 4.

12. Elément (28, 34) d'un réseau de télécommunication **caractérisé en ce qu'**il est apte à insérer dans un champ didentifiant-client d'une requête DHCP une valeur dépendant d'un terminal prédéterminé (2) accédant à un réseau de téléphonie mobile (4, 18).

13. Ensemble de télécommunication (4, 18) comprenant un terminal (2) selon l'une des revendications 10 ou 11 et/ou un élément (28, 34) selon la revendication 12.

14. Programme comprenant des instructions aptes à commander la mise en oeuvre d'un procédé selon l'une quelconque des revendications 1 à 9.

15. Support d'enregistrement comprenant un programme selon la revendication précédente.

16. Procédé de mise à disposition d'un programme selon la revendication 14 en vue de son téléchargement.
